# EUROPEAN PATENT APPLICATION

(11) **EP 2 536 259 A2**
(43) Date of publication of application: **19.12.2012**
(21) Application number: 12171892.8
(22) Date of filing: 14.06.2012
(51) Int. Cl.: H05B 37/02, H05B 33/08

(54) **Device, system, and method for controlling light source to capture image**

(30) Priority: 17.06.2011 KR 20110059174
(71) Applicant: Samsung LED Co., Ltd., Suwon-si, Gyeonggi-do (KR)
(72) Inventor: Chung, Tai-oh, 158-754 Seoul (KR)
(74) Representative: Grünecker, Kinkeldey, Stockmair & Schwanhäusser

(57) **Abstract**

A light source control device (10) according to the present invention includes an image capturing unit (11) for capturing an image by using light emitted from a light source (15) and reflected or scattered on a subject; a user interface (12) for receiving information regarding optical characteristics of the light source (15); a control unit (13) for generating a light source control signal for setting a lighting state of the light source (15) by using the received information regarding optical characteristics; and a wireless communication module (14) for transmitting the generated light source control signal to the light source 15).

## Description

### CROSS-REFERENCE TO RELATED APPLICATIONS

This application claims the benefit of Korean Patent Application No. 10-2011-0059174, filed on June 17, 2011, in the Korean Intellectual Property Office, the disclosure of which is incorporated herein in its entirety by reference.

### BACKGROUND

### 1. Field

The present disclosure relates to devices, systems, and methods for controlling a light source to capture an image.

### 2. Description of the Related Art

In general, when a subject is photographed by using a photographing device such as a camera or a video camera, in order to obtain an image having the same colors viewed with bare eyes or an image having various effects, a user adjusts a white balance or aperture level of the photographing device or uses a color filter effect.

If a digital camera is used, a user opens or shuts an aperture by manipulating various buttons or a touch panel in order to adjust a brightness of a captured image. If an image has already been captured, the user creates an image different from the originally captured image by editing an image converted by an image sensor into an electrical signal.

However, the methods above do not fundamentally change a photographing environment, and merely adjust the intensity of light incident on a photographing device or re-process an already captured image by using, for example, an imaging processor. Also, if a photographing device and a subject are fixed, the direction of light may not be changed and a compositive effect using a plurality of light sources may not be easily achieved.

### SUMMARY

Provided are devices, systems, and methods for controlling a light source to capture an image which are capable of capturing an image having a desired quality by controlling, for example, a color temperature, a color, and a luminance of a light source to capture the image.

Additional aspects will be set forth in part in the description which follows and, in part, will be apparent from the description, or may be learned by practice of the presented embodiments.

According to an aspect of the present invention, a light source control device includes an image capturing unit for capturing an image by using light emitted from a light source and reflected or scattered on a subject; a user interface for receiving information regarding optical characteristics of the light source; a control unit for generating a light source control signal for setting a lighting state of the light source by using the received information regarding optical characteristics; and a wireless communication module for transmitting the generated light source control signal to the light source.

The wireless communication module may be detachably attached to the light source control device.

The wireless communication module may use a wireless communication protocol selected from among wireless fidelity (Wi-Fi), wireless broadband internet (WiBro), high speed downlink packet access (HSDPA), wireless local area network (WLAN), home radio frequency (Home RF), worldwide interoperability for microwave access (WiMAX), ZigBee, Bluetooth, ultra wideband (UWB), infrared data association (IrDA), and shared wireless access protocol (SWAP) protocols.

The user interface may receive information regarding the wireless communication protocol used by the wireless communication module, and the wireless communication module may transmit the generated light source control signal to the light source by using the wireless communication protocol.

The optical characteristics may include at least one of a color temperature, a color, a luminance, a light source position, and a light irradiation angle.

The light source control device may further include a sensor unit for detecting at least one of a color temperature distribution, a color distribution, and a luminance distribution of a lighting space around the subject illuminated by the light source, and generating a detection signal, and the control unit may generate the light source control signal by using the generated detection signal.

The light source control device may further include a storage unit for storing a reference distribution value regarding at least one of the color temperature, the color, and the luminance, and the control unit may calculate a difference between the detection signal and the reference distribution value and, if the calculated difference is out of a predetermined range, generates the light source control signal by using the generated detection signal.

The light source control device may further include a storage unit for storing a reference distribution value regarding at least one of the color temperature, the color, and the luminance, and the control unit may detect at least one of a color temperature distribution, a color distribution, and a luminance distribution of the image captured by the image capturing unit, may generate a detection signal, may calculate a difference between the detection signal and the reference distribution value, and, if the calculated difference is out of a predetermined range, may generate the light source control signal by using the generated detection signal.

According to another aspect of the present invention, a light source control system includes a light source control device including an image capturing unit for capturing an image by using light emitted from a light source and reflected or scattered on a subject; a user interface for receiving information regarding optical characteristics of the light source; a control unit for generating a light source control signal for setting a lighting state of the light source by using the received information regarding optical characteristics; and a wireless communication module for transmitting the generated light source control signal to the light source; and the light source including a lamp; a reception unit for receiving the light source control signal; and a driving control unit for driving the lamp by using the received light source control signal.

The optical characteristics may include at least one of a color temperature, a color, a luminance, a light source position, and a light irradiation angle.

The light source control device may further include a sensor unit for detecting at least one of a color temperature distribution, a color distribution, and a luminance distribution of a lighting space around the subject illuminated by the light source, and generating a detection signal; and a storage unit for storing a reference distribution value regarding at least one of the color temperature, the color, and the luminance, and the control unit may calculate a difference between the detection signal and the reference distribution value and, if the calculated difference is out of a predetermined range, may generate the light source control signal by using the generated detection signal.

The light source control device may further include a storage unit for storing a reference distribution value regarding at least one of the color temperature, the color, and the luminance, and the control unit may detect at least one of a color temperature distribution, a color distribution, and a luminance distribution of the image captured by the image capturing unit, may generate a detection signal, may calculate a difference between the detection signal and the reference distribution value, and, if the calculated difference is out of a predetermined range, may generate the light source control signal by using the generated detection signal.

According to another aspect of the present invention, a light source control method includes (a) setting information regarding optical characteristics of a light source; (b) generating a light source control signal for setting a lighting state of the light source by using the set information regarding optical characteristics; and (c) transmitting the generated light source control signal to the light source by using a wireless communication protocol.

The wireless communication module may use a wireless communication protocol selected from among wireless fidelity (Wi-Fi), wireless broadband internet (WiBro), high speed downlink packet access (HSDPA), wireless local area network (WLAN), home radio frequency (Home RF), worldwide interoperability for microwave access (WiMAX), ZigBee, Bluetooth, ultra wideband (UWB), infrared data association (IrDA), and shared wireless access protocol (SWAP) protocols.

The light source control method may further include, before operation (b), setting information regarding the wireless communication protocol.

The optical characteristics may include at least one of a color temperature, a color, a luminance, a light source position, and a light irradiation angle.

The light source control method may further include, after operation (c), detecting at least one of a color temperature distribution, a color distribution, and a luminance distribution of a lighting space around a subject illuminated by the light source, and generating a detection signal; and generating the light source control signal by using the generated detection signal.

The light source control method may further include calculating a difference between the detection signal and a reference distribution value regarding at least one of the color temperature, the color, and the luminance and, if the calculated difference is out of a predetermined range, generating the light source control signal by using the generated detection signal.

The light source control method may further include capturing an image; detecting at least one of a color temperature distribution, a color distribution, and a luminance distribution of the captured image, and generating a detection signal; and calculating a difference between the detection signal and a reference distribution value regarding at least one of the color temperature, the color, and the luminance and, if the calculated difference is out of a predetermined range, generating the light source control signal by using the generated detection signal.

### BRIEF DESCRIPTION OF THE DRAWINGS

These and/or other aspects will become apparent and more readily appreciated from the following description of the embodiments, taken in conjunction with the accompanying drawings in which:

FIG. 1 is a block diagram of a light source control device according to an embodiment of the present invention;

FIG. 2 is a schematic diagram showing an example of a user interface for setting optical characteristics of a light source, according to an embodiment of the present invention;

FIG. 3 is a schematic diagram showing a detailed setting screen for adjusting a color temperature of the light source, according to an embodiment of the present invention;

FIG. 4 is a schematic diagram showing a detailed setting screen for adjusting a color of the light source, according to an embodiment of the present invention;

FIG. 5 is a schematic diagram showing a detailed setting screen for adjusting a luminance of the light source, according to an embodiment of the present invention;

FIGS. 6A and 6B are schematic diagrams showing an example of a user interface for setting a wireless communication protocol of the light source, according to an embodiment of the present invention;

FIG. 7 is a schematic diagram showing an example of the user interface for integrally controlling the light source on one screen, according to an embodiment of the present invention;

FIG. 8 is a block diagram of a light source control device according to another embodiment of the present invention; and

FIGS. 9 through 11 are flowcharts of light source control methods according to embodiments of the present invention.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description.

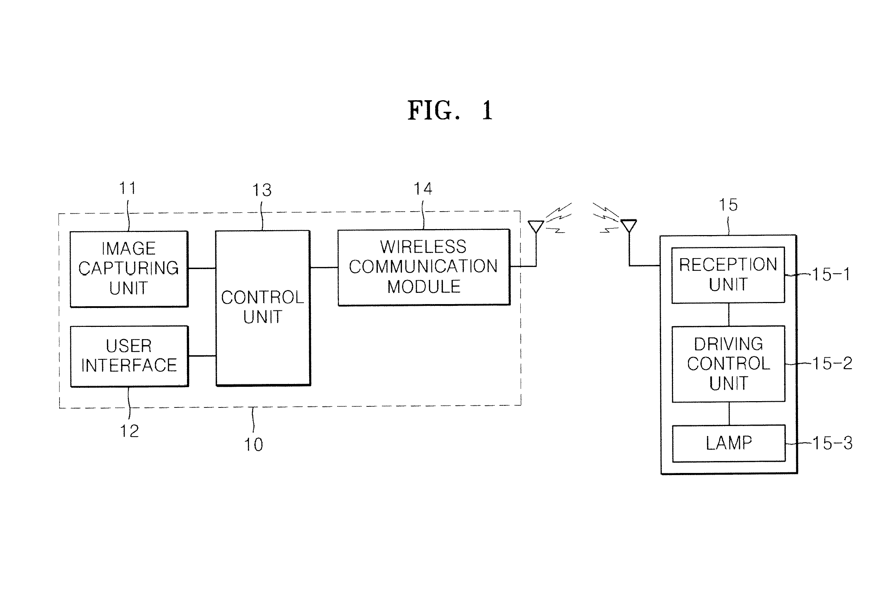

FIG. 1 is a block diagram of a light source control device 10 according to an embodiment of the present invention.

As illustrated in FIG. 1, the light source control device 10 according to the current embodiment may include an image capturing unit 11, a user interface 12, a control unit 13, and a wireless communication module 14.

A light source control system according to an embodiment of the present invention may include the light source control device 10 and a light source 15. The light source control system will be described below after describing the light source control device 10.

The image capturing unit 11 captures an image by using light emitted from the light source 15 and reflected or scattered on a subject. The image capturing unit 11 may include a lens and an image sensor. The lens forms an image of the subject, and may include one or more lenses.

The lens may be a convex lens, a concave lens, or an aspherical lens, and may have rotational symmetry about an optical axis. The optical axis may be defined as an axis that passes through vertices of a plurality of lens surfaces.

The image sensor senses the image formed by the lens as an electrical signal. The image sensor may be a charge-coupled device (CCD) image sensor or a complementary metal-oxide semiconductor (CMOS) image sensor.

The user interface 12 receives information regarding optical characteristics of the light source 15. The optical characteristics may include at least one of a color temperature, a color, a luminance, a light source position, and a light irradiation angle.

The user interface 12 may include an input unit and/or an output unit. The input unit may be implemented as key input buttons, a keypad, or a keyboard. The output unit may be implemented as a light-emitting diode (LED)-type display lamp indicating an operation state of the light source control device 10, or an image display device such as a liquid crystal display (LCD) or an organic light-emitting diode (OLED) display. Alternatively, the user interface 12 may be implemented as a touchscreen in which an input unit and an output unit are integrated into one image display device.

The color temperature represents a variation in color of emitted light according to temperature as an absolute temperature K with reference to white. If an absolute black body that does not reflect light at all is heated, the black body emits different colors of light according to its temperature. In this case, the black body emits blue-based light having a short wavelength if the temperature is high, and emits red-based light having a long wavelength if the temperature is low. The color temperature is determined with reference to a heating temperature and a color corresponding to the temperature. The color refers to a characteristic identified in the name of, for example, red, green, or blue. The luminance represents the brightness in a unit area of the light source 15, and is a surface brightness of an emissive surface, a transmissive surface, or a reflective surface.

Also, the user interface 12 may receive information regarding a wireless communication protocol used by the wireless communication module 14.

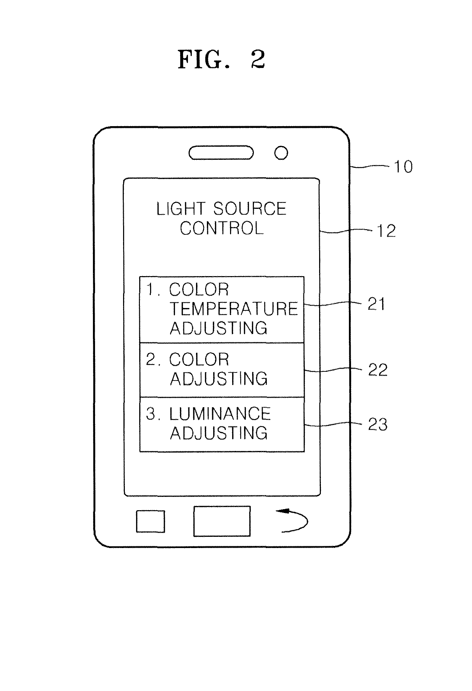

The information regarding optical characteristics such as the color temperature, the color, and the luminance, or the wireless communication protocol, which is received by the user interface 12, will be described below with reference to FIGS. 2 through 7.

The control unit 13 generates a light source control signal for setting a lighting state of the light source 15 by using the information regarding optical characteristics which is received by the user interface 12.

As illustrated in FIG. 1, the light source 15 may include a reception unit 15-1, a driving control unit 15-2, and a lamp 15-3. The lamp 15-3 of the light source 15 may be one of an LED, an incandescent lamp, a fluorescent lamp, and a halogen lamp.

If the lamp 15-3 of the light source 15 is an LED, the light source 15 may include a white LED and/or a combination of red, green, and blue LEDs representing the three primary colors of light. The control unit 13 may control a current or voltage supplied to each of the red, green, and blue LEDs based on at least one of the color temperature, the color, and the luminance. As such, the control unit 13 may generate the light source control signal for setting the lighting state of the light source 15.

The wireless communication module 14 transmits the light source control signal generated by the control unit 13 to the light source 15. In more detail, the wireless communication module 14 transmits the light source control signal by performing wireless communication with the reception unit 15-1 of the light source 15. The wireless communication module 14 may transmit the light source control signal to the light source 15 by using a communication protocol such as a 3rd generation (3G), wireless fidelity (Wi-Fi), wireless broadband internet (WiBro), high speed downlink packet access (HSDPA), wireless local area network (WLAN), worldwide interoperability for microwave access (WiMAX), ZigBee, Bluetooth, ultra wideband (UWB), infrared data association (IrDA), or shared wireless access protocol (SWAP) protocol. If the information regarding a wireless communication protocol is received by the user interface 12, the wireless communication module 14 transmits the generated light source control signal to the light source 15 by using the received information regarding a wireless communication protocol.

According to an embodiment of the present invention, the wireless communication module 14 may be detachably attached to the light source control device 10. According to another embodiment of the present invention, the control unit 13 and the wireless communication module 14 may be integrally formed, and the integrally formed control unit 13 and wireless communication module 14 may be detachably attached to light source control device 10. As such, the portability of the light source control device 10 may be increased, and unnecessary power loss due to a waste in standby power may be prevented. Also, by standardizing input and output terminals of the integrally formed control unit 13 and wireless communication module 14, the generality of the light source control device 10 may be expanded.

FIG. 2 is a schematic diagram showing an example of the user interface 12 for setting optical characteristics of the light source 15, according to an embodiment of the present invention.

As illustrated in FIG. 2, the light source control device 10 includes the user interface 12 as an image display device. The user interface 12 illustrated in FIG. 2 displays a basic screen for controlling the light source 15. The basic screen of the user interface 12 displays optical characteristic setting items such as a color temperature adjusting item 21, a color adjusting item 22, and a luminance adjusting item 23. As described above in relation to FIG. 1, the user interface 12 may be implemented as a touchscreen. In this case, if a touch input on a certain region of the touchscreen is received, the user interface 12 may recognize that a setting item corresponding to the certain region is selected.

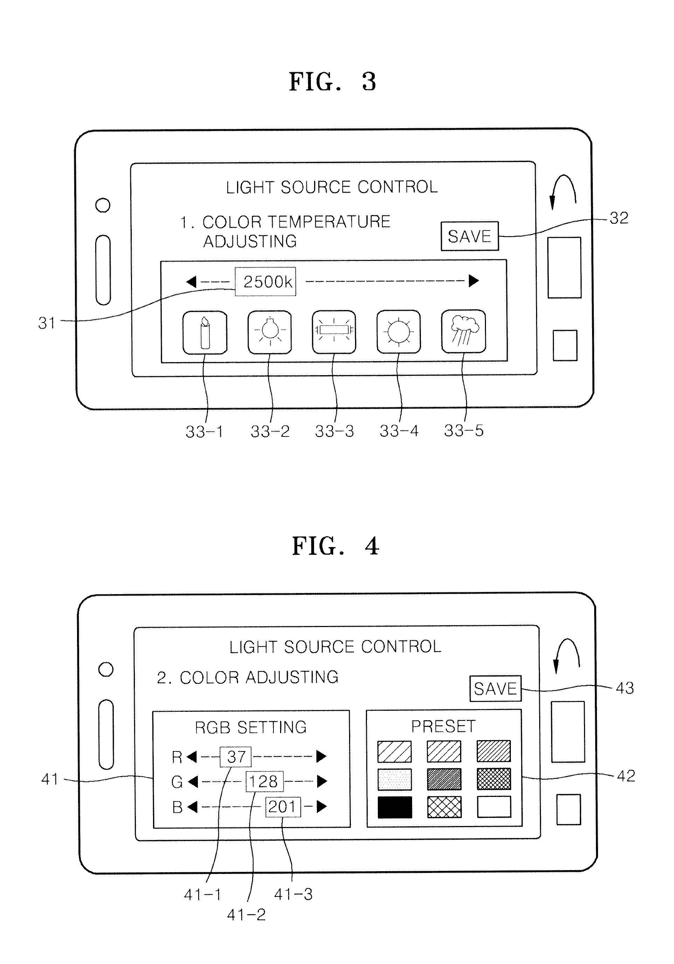

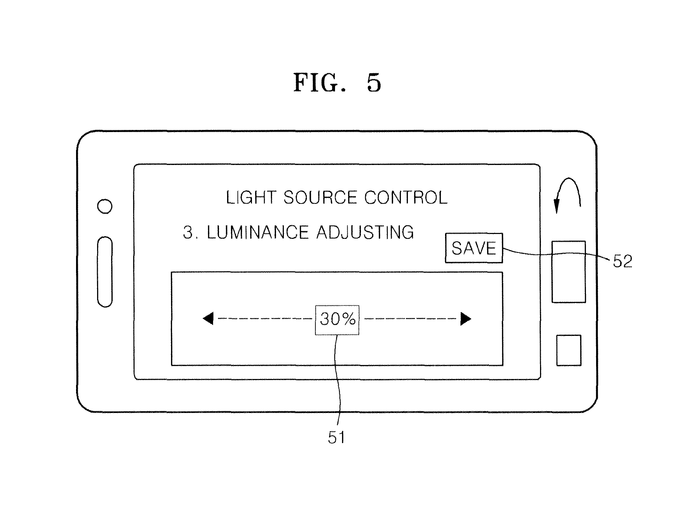

On the touchscreen of the user interface 12, if the color temperature adjusting item 21 is selected, the screen switches to a detailed setting screen for adjusting a color temperature as illustrated in FIG. 3. If the color adjusting item 22 is selected, the screen switches to a detailed setting screen for adjusting a color as illustrated in FIG. 4. If the luminance adjusting item 23 is selected, the screen switches to a detailed setting screen for adjusting a luminance as illustrated in FIG. 5.

FIG. 3 is an image showing the detailed setting screen for adjusting a color temperature of the light source 15. The detailed setting screen illustrated in FIG. 3 may display a color temperature adjusting scroll bar 31, a color temperature save button 32, and pre-stored color temperature buttons 33-1 through 33-5.

The color temperature adjusting scroll bar 31 is an object for manually adjusting a color temperature. The color temperature of the light source 15 may be minutely adjusted by scrolling the color temperature adjusting scroll bar 31 leftward or rightward. The pre-stored color temperature buttons 33-1 through 33-5 are objects for presenting color temperatures set and stored previously according to a type of the light source 15, and store color temperatures corresponding to, for example, candle light (33-1), an incandescent lamp (33-2), a fluorescent lamp (33-3), sunlight (33-4), and a cloudy day (33-5) from a left side. The manually and minutely adjusted color temperature may be stored as additional data or as a color temperature corresponding to one of the pre-stored color temperature buttons 33-1 through 33-5, by selecting the color temperature save button 32.

FIG. 4 is a schematic diagram showing the detailed setting screen for adjusting a color of the light source 15, according to an embodiment of the present invention. The detailed setting screen illustrated in FIG. 4 may display color adjusting scroll bars 41-1 through 41-3 regarding primary colors in an RGB setting menu 41. Also, the detailed setting screen illustrated in FIG. 4 may display a color save button 43 and pre-stored color buttons in a preset menu 42.

The color adjusting scroll bars 41-1 through 41-3 are objects for individually adjusting levels of red, green, and blue that are primary colors for determining the color of the light source 15. The level of each color may be set from 0 to 255. The color of the light source 15 may be minutely adjusted by scrolling each of the color adjusting scroll bars 41-1 through 41-3 leftward or rightward so as to adjust a combination ratio of the primary colors. The pre-stored color buttons in the preset menu 42 are objects for presenting colors set and stored according to the combination ratio of the primary colors. The manually and minutely adjusted color may be stored as additional data or as a color corresponding to one of the pre-stored color buttons, by selecting the color save button 43.

Although the color of the light source 15 is adjusted using RGB color coordinates representing the primary colors on the detailed setting screen illustrated in FIG. 4, various color coordinates such as YUV, YCbCr, YPbPr, CMY, and HIS may also be used.

FIG. 5 is a schematic diagram showing the detailed setting screen for adjusting a luminance of the light source 15, according to an embodiment of the present invention. The detailed setting screen illustrated in FIG. 5 may display a luminance adjusting scroll bar 51 and a luminance save button 52.

The luminance adjusting scroll bar 51 is an object for determining a luminance of the light source 15. The luminance of the light source 15 may be minutely adjusted from 0% to 100% by scrolling the luminance adjusting scroll bar 51 leftward or rightward. The manually and minutely adjusted luminance may be stored as additional data by selecting the luminance save button 52.

By using the user interface 12 illustrated in FIGS. 2 through FIG. 5, the light source control device 10 receives the information regarding optical characteristics such as the color temperature, the color, and the luminance. The light source control device 10 generates and transmits the light source control signal to the light source 15 by using the received information regarding optical characteristics. As such, a lighting state having optical characteristics desired by a user to capture a high-quality image may be obtained.

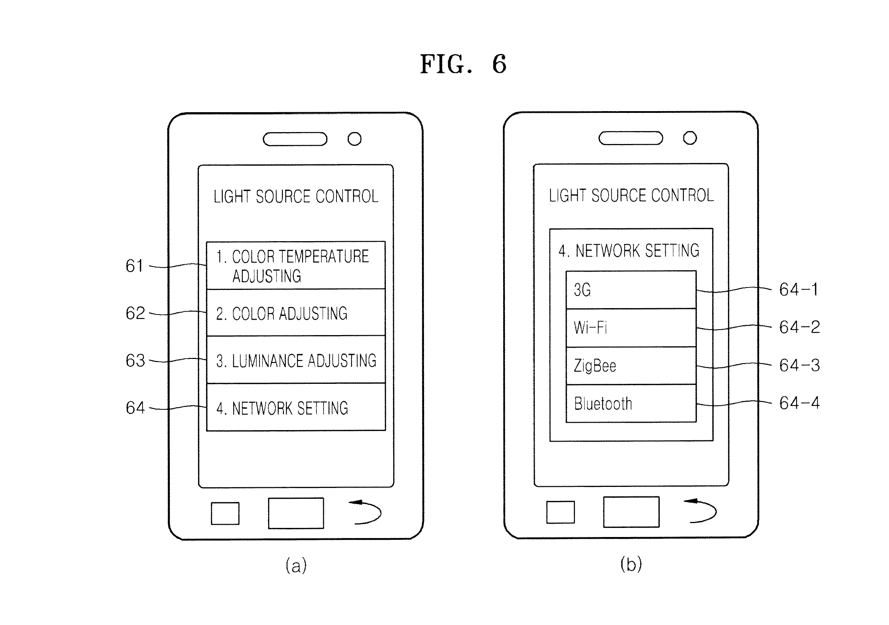

FIGS. 6A and 6B are schematic diagrams showing an example of the user interface 12 for setting a wireless communication protocol for controlling the light source 15. FIG. 6A shows that a network setting item 64 is added to the basic screen of the user interface 12 illustrated in FIG. 2. If the network setting item 64 is selected on a basic screen illustrated in FIG. 6A, the screen switches to a detailed setting screen illustrated in FIG. 6B.

FIG. 6B shows the detailed setting screen for selecting a wireless communication protocol for controlling the light source 15. The detailed setting screen illustrated in FIG. 6B displays wireless communication protocols such as 3G 64-1, Wi-Fi 64-2, ZigBee 64-3, and Bluetooth 64-4, the wireless communication protocols are not limited thereto. If one wireless communication protocol is selected, the light source control device 10 may detect the light source 15 using the selected wireless communication protocol, and may display information regarding the detected light source 15, e.g., a unique identification (ID), on the screen.

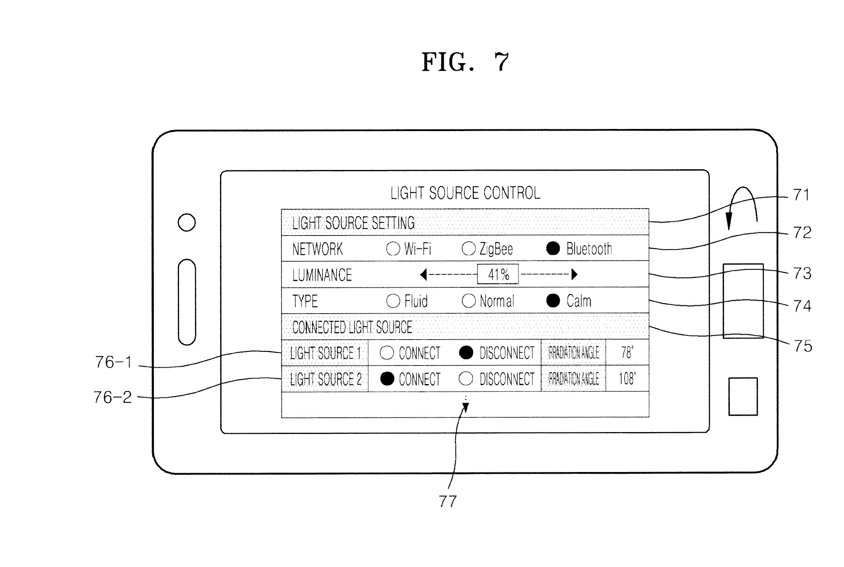

FIG. 7 is a schematic diagram showing an example of the user interface 12 for integrally controlling the light source 15 on one screen.

The user interface 12 illustrated in FIG. 7 displays a concise setting screen for controlling the light source 15. The concise setting screen of the user interface 12 may display light source setting items 71 such as a network setting item 72 for selecting a wireless communication protocol, a luminance setting item 73, and a color temperature setting item 74. Also, the concise setting screen may display connection setting items 76-1 and 76-2 for selecting whether to connect the wireless communication protocol to light sources connectable to the light source control device 10. If all connectable light sources may not be displayed on one screen, the screen may be scrolled using a scroll button 77 and thus whether to connect the wireless communication protocol with regard to all connectable light sources may be selected.

According to an embodiment of the present invention, a dimming scenario setting item for selecting a dimming scenario of each connectable light source may also be displayed on a basic screen or a concise setting screen of the user interface 12. That is, for example, a dimming ratio, a variation in color temperature, a variation in color, a variation in light source position, a variation in light irradiation angle of each light source according to time may be set. As such, when a moving image is captured, the light source control device 10 may generate a time-based lighting space having various atmospheres.

According to another embodiment of the present invention, the light source control device 10 may also control a state of the light source 15, e.g., a position and/or a light irradiation angle. In this case, the light source 15 may include a moving means and/or a rotation means for changing the position and/or the light irradiation angle. The basic screen or the concise setting screen of the user interface 12 may display a state displaying item for displaying the position and/or the light irradiation angle of the light source 15, and a state changing item for changing the position and/or the light irradiation angle of the light source 15.

According to another embodiment of the present invention, the basic screen or the concise setting screen of the user interface 12 may display an item for setting a size of a lighting space lighted by the light source 15 (e.g., an area or a distance between the floor to the ceiling), or an item for setting a background color of the lighting space. Even when the same light source 15 emits the same intensity of light, since optical characteristics such as a color temperature, a color, and a luminance of a captured image vary according to the size or the background color of the lighting space, the size or the background color of the lighting space also influences image quality.

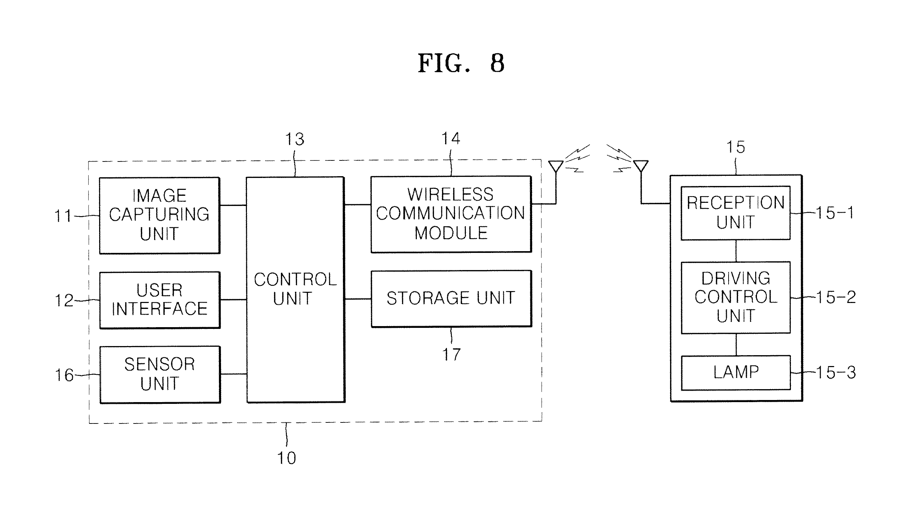

FIG. 8 is a block diagram of a light source control device 10 according to another embodiment of the present invention.

According to an embodiment of the present invention, the light source control device 10 may include an image capturing unit 11, a user interface 12, a control unit 13, a wireless communication module 14, and a sensor unit 16.

The sensor unit 16 detects at least one of a color temperature distribution, a color distribution, and a luminance distribution of a lighting space around a subject, and generates a detection signal. For example, the color temperature distribution, the color distribution, and the luminance distribution may be respectively calculated as averages of values of a color temperature, a color, and a luminance detected in the whole lighting space by the sensor unit 16. The control unit 13 generates a light source control signal by using the generated detection signal. The wireless communication module 14 transmits the generated light source control signal to the light source 15. The light source 15 is controlled according to the received light source control signal.

According to another embodiment of the present invention, the light source control device 10 may further include a storage unit 17. The storage unit 17 may store a reference distribution value regarding at least one of a color temperature, a color, and a luminance. The reference distribution value may be a color temperature, a color, or a luminance input from the user interface 12, or may be a value obtained by compensating for the input color temperature, the color, or the luminance at a predetermined ratio. The control unit 13 may calculate a difference between a generated detection signal and the reference distribution value and, if the calculated difference is out of a predetermined range, may generate a light source control signal for adjusting the color temperature, the color, or the luminance of the light source 15 by using the detection signal. The predetermined range refers to a minimum range beyond visual thresholds in which a difference in color temperature, color, or luminance is recognizable with bare eyes.

For example, if the pre-stored color temperature button 33-3 corresponding to a fluorescent lamp is selected in FIG. 3, the control unit 13 generates a light source control signal corresponding to a fluorescent lamp, and the light source 15 illuminates a subject according to the light source control signal. The sensor unit 16 detects a color temperature distribution of a lighting space around the subject illuminated by the light source 15. The color temperature distribution may be an average of values of the color temperature detected in the whole lighting space by the sensor unit 16. In this case, even when the same light source 15 illuminates the lighting space with the same settings, the color temperature distribution may vary according to characteristics of the lighting space, e.g., an object in the lighting space or a background color of the lighting space. After the color temperature distribution of the lighting space is detected, the sensor unit 16 generates a detection signal. The control unit 13 reads the reference distribution value regarding the color temperature which is stored in the storage unit 17, and then calculates the difference between the generated detection signal and the reference distribution value. If the calculated difference is out of the predetermined range, the control unit 13 generates a light source control signal for resetting the color temperature of the light source 15 by using the detection signal. The light source 15 illuminates the lighting space including the subject according to the newly generated light source control signal. After that, until the difference between the detection signal and the reference distribution value is within the predetermined range, the sensor unit 16 repeatedly generates a new detection signal, and the control unit 13 repeatedly generates a new light source control signal by using the new detection signal. As such, a difference between a user-desired lighting state and a lighting state illuminated by the light source 15 may be reduced and thus the user may capture an image having a desired quality.

According to another embodiment of the present invention, the image capturing unit 11 captures an image according to optical characteristics such as a color temperature, a color, and a luminance set by using the user interface 12. The control unit 13 calculates at least one of a color temperature distribution, a color distribution, and a luminance distribution of the captured image, and generates a detection signal. After that, the control unit 13 calculates a difference between the generated detection signal and the reference distribution value and, if the calculated difference is out of a predetermined range, generates a light source control signal for adjusting a color temperature, a color, or a luminance of the light source 15 by using the detection signal. That is, according to the current embodiment, the light source control device 10 may not additionally include the sensor unit 16, and may capture an image having a user-desired quality by analyzing the color temperature distribution, the color distribution, and the luminance distribution of the image captured by the image capturing unit 11, and reflecting them to the light source 15.

The light source control system according to an embodiment of the present invention may include the light source control device 10 and the light source 15, as illustrated in FIG. 1. The light source control device 10 may include the image capturing unit 11 for capturing an image by using light emitted from the light source 15 and reflected or scattered on a subject, the user interface 12 for receiving information regarding optical characteristics of the light source 15, the control unit 13 for generating a light source control signal for setting a lighting state of the light source 15 by using the received information regarding optical characteristics, and the wireless communication module 14 for transmitting the generated light source control signal to the light source 15. Also, the light source 15 may include the reception unit 15-1 for receiving the light source control signal, the driving control unit 15-2 for driving the lamp 15-3 by using the received light source control signal, and the lamp 15-3. The optical characteristics may include at least one of a color temperature, a color, a luminance, a light source position, and a light irradiation angle.

Also, as illustrated in FIG. 8, in the light source control system according to the current embodiment, the light source control device 10 further includes the sensor unit 16 for detecting at least one of a color temperature distribution, a color distribution, and a luminance distribution of a lighting space around the subject illuminated by the light source 15, and generating a detection signal, and the storage unit 17 for storing a reference distribution value regarding at least one of a color temperature, a color, and a luminance. In this case, the control unit 13 may calculate a difference between the detection signal and the reference distribution value and, if the calculated difference is out of a predetermined range, may generate a light source control signal by using the generated detection signal.

In a light source control system according to another embodiment of the present invention, the light source control device 10 may further include the storage unit 17 for storing a reference distribution value regarding at least one of a color temperature, a color, and a luminance. In this case, the control unit 13 detects at least one of a color temperature distribution, a color distribution, and a luminance distribution of an image captured by the image capturing unit 11, and generates a detection signal. Then, the control unit 13 may calculate a difference between the detection signal and the reference distribution value and, if the calculated difference is out of a predetermined range, may generate a light source control signal by using the detection signal.

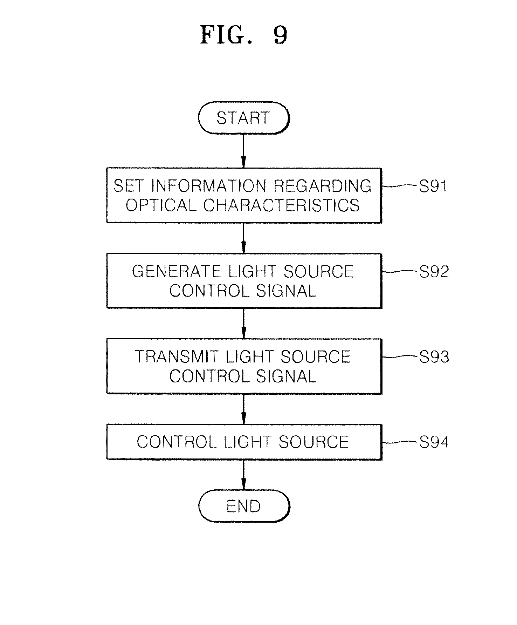

FIG. 9 is a flowchart of a method of controlling the light source 15 to capture an image, according to an embodiment of the present invention.

In operation S91, information regarding optical characteristics of the light source 15 is set. The optical characteristics may include at least one of a color temperature, a color, a luminance, a light source position, and a light irradiation angle. In operation S92, a light source control signal for setting a lighting state of the light source 15 is generated using the set information regarding optical characteristics. In operation S93, the generated light source control signal is transmitted to the light source 15 by using a wireless communication protocol. The wireless communication protocol may be a Wi-Fi, WiBro, HSDPA, WLAN, home radio frequency (Home RF), WiMAX, ZigBee, Bluetooth, UWB, IrDA, or SWAP protocol. In operation S94, the light source 15 is controlled according to the received light source control signal.

If the information regarding the light source position and/or the light irradiation angle from among the optical characteristics is received, and the light source control signal is generated and the light source is controlled according to the received information, a user may freely adjust a light incident angle or a shade of a subject by changing the light source position and/or the light irradiation angle without moving the subject.

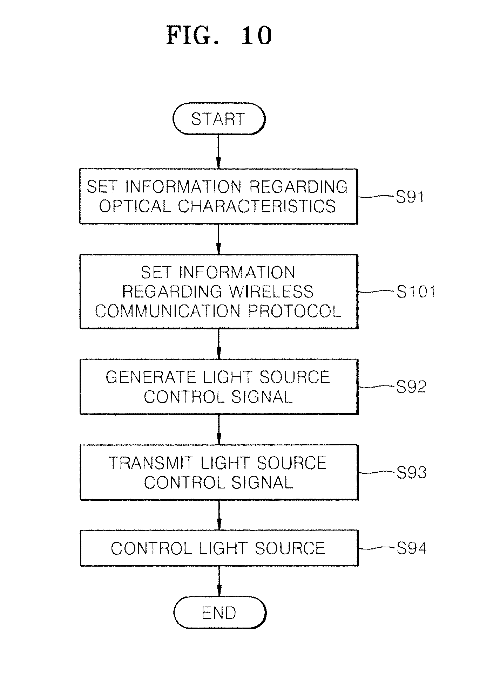

FIG. 10 is a flowchart of a method of controlling the light source 15 to capture an image, according to another embodiment of the present invention.

The method FIG. 10 may further include setting information regarding a wireless communication protocol (operation S101), before operation S92 illustrated in FIG. 9 is performed. That is, according to the current embodiment, a user may set a wireless communication protocol optimized for a location for capturing an image by using the user interface 12. Although operation S101 is performed after operation S91 in FIG. 10, operation S101 may be alternatively performed before operation S91.

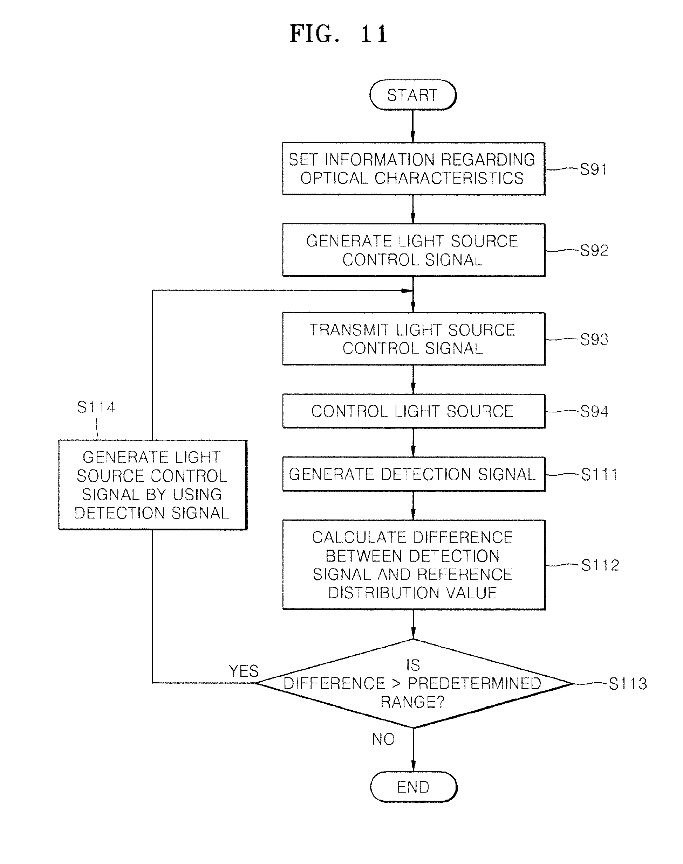

FIG. 11 is a flowchart of a method of controlling the light source 15 to capture an image, according to another embodiment of the present invention.

In operation S91, information regarding optical characteristics of the light source 15 is set. In operation S92, a light source control signal for setting a lighting state of the light source 15 is generated using the set information regarding optical characteristics. In operation S93, the generated light source control signal is transmitted to the light source 15 by using a wireless communication protocol. In operation S94, the light source 15 is controlled according to the received light source control signal.

In operation S111, at least one of a color temperature distribution, a color distribution, and a luminance distribution of a lighting space around a subject illuminated by the light source 15 is detected, and a detection signal is generated. According to the current embodiment, a light source control signal is generated using the generated detection signal. The light source 15 is controlled by using the generated light source control signal. As such, the light source 15 may be controlled to be closer to a desired lighting state by using the optical characteristics such as a color temperature, a color, and a luminance of the lighting space around the subject.

In operation S112, a difference between the generated detection signal and a reference distribution value is calculated. The reference distribution value may be a color temperature, a color, or a luminance input by using the user interface 12, or may be a value obtained by compensating for the input color temperature, the color, or the luminance at a predetermined ratio. The reference distribution value may be input by using the user interface 12 in operation S91, then may be stored in the storage unit 17, and may be read from the storage unit 17 before operation S112.

In operation S113, if the calculated difference is out of a predetermined range, the method proceeds to operation S114 and the light source control signal is newly generated using the generated detection signal. The newly generated light source control signal is used to control the light source 15 in operations S93 and S94. After that, the lighting space is illuminated according to the newly generated light source control signal, and then operations S111 through S114 are repeated. If operations S93, S94, and S111 through S114 are repeated, a lighting state of a lighting space that is closer to a user-desired lighting state may be obtained.

According to another embodiment of the present invention, a light source control method may further include (a) capturing an image, (b) detecting at least one of a color temperature distribution, a color distribution, and a luminance distribution of the captured image, and generating a detection signal, (c) reading from the storage unit 17 a reference distribution value regarding at least one of a color temperature, a color, and a luminance, and (d) calculating a difference between the detection signal and the reference distribution value and, if the calculated difference is out of a predetermined range, generating a light source control signal by using the generated detection signal, after operation S94 illustrated in FIG. 9.

That is, according to the current embodiment, the light source control device 10 may not additionally include the sensor unit 16, and may capture an image having a user-desired quality by analyzing and reflecting to the light source 15 the color temperature distribution, the color distribution, and the luminance distribution of the image captured by the image capturing unit 11.

As described above, according to one or more of the above embodiments of the present invention, an image having a desired quality and not requiring post-processing may be captured by controlling, for example, a color temperature, a color, and a luminance of a light source to capture the image.

It should be understood that the exemplary embodiments described therein should be considered in a descriptive sense only and not for purposes of limitation. Descriptions of features or aspects within each embodiment should typically be considered as available for other similar features or aspects in other embodiments.

## Claims

1. A light source control device comprising:
an image capturing unit for capturing an image by using light emitted from a light source and reflected or scattered on a subject;
a user interface for receiving information regarding optical characteristics of the light source;
a control unit for generating a light source control signal for setting a lighting state of the light source by using the received information regarding optical characteristics; and
a wireless communication module for transmitting the generated light source control signal to the light source.

2. The light source control device of claim 1, wherein the wireless communication module is detachably attached to the light source control device.

3. The light source control device of claim 1, wherein the wireless communication module uses a wireless communication protocol selected from among wireless fidelity (Wi-Fi), wireless broadband internet (WiBro), high speed downlink packet access (HSDPA), wireless local area network (WLAN), home radio frequency (Home RF), worldwide interoperability for microwave access (WiMAX), ZigBee, Bluetooth, ultra wideband (UWB), infrared data association (IrDA), and shared wireless access protocol (SWAP) protocols.

4. The light source control device of claim 3, wherein the user interface receives information regarding the wireless communication protocol used by the wireless communication module, and
wherein the wireless communication module transmits the generated light source control signal to the light source by using the wireless communication protocol.

5. The light source control device of claim 1, wherein the optical characteristics comprise at least one of a color temperature, a color, a luminance, a light source position, and a light irradiation angle.

6. The light source control device of claim 5, further comprising a sensor unit for detecting at least one of a color temperature distribution, a color distribution, and a luminance distribution of a lighting space around the subject illuminated by the light source, and generating a detection signal,
wherein the control unit generates the light source control signal by using the generated detection signal.

7. The light source control device of claim 6, further comprising a storage unit for storing a reference distribution value regarding at least one of the color temperature, the color, and the luminance,
wherein the control unit calculates a difference between the detection signal and the reference distribution value and, if the calculated difference is out of a predetermined range, generates the light source control signal by using the generated detection signal.

8. The light source control device of claim 5, further comprising a storage unit for storing a reference distribution value regarding at least one of the color temperature, the color, and the luminance,
wherein the control unit detects at least one of a color temperature distribution, a color distribution, and a luminance distribution of the image captured by the image capturing unit, generates a detection signal, calculates a difference between the detection signal and the reference distribution value, and, if the calculated difference is out of a predetermined range, generates the light source control signal by using the generated detection signal.

9. A light source control method comprising:
(a) setting information regarding optical characteristics of a light source;
(b) generating a light source control signal for setting a lighting state of the light source by using the set information regarding optical characteristics; and
(c) transmitting the generated light source control signal to the light source by using a wireless communication protocol.

10. The light source control method of claim 9, wherein the wireless communication module uses a wireless communication protocol selected from among wireless fidelity (Wi-Fi), wireless broadband internet (WiBro), high speed downlink packet access (HSDPA), wireless local area network (WLAN), home radio frequency (Home RF), worldwide interoperability for microwave access (WiMAX), ZigBee, Bluetooth, ultra wideband (UWB), infrared data association (IrDA), and shared wireless access protocol (SWAP) protocols.

11. The light source control method of claim 10, further comprising, before operation (b), setting information regarding the wireless communication protocol.

12. The light source control method of claim 9, wherein the optical characteristics comprise at least one of a color temperature, a color, a luminance, a light source position, and a light irradiation angle.

13. The light source control method of claim 9, further comprising, after operation (c):
detecting at least one of a color temperature distribution, a color distribution, and a luminance distribution of a lighting space around a subject illuminated by the light source, and generating a detection signal; and
generating the light source control signal by using the generated detection signal.

14. The light source control method of claim 10, further comprising calculating a difference between the detection signal and a reference distribution value regarding at least one of the color temperature, the color, and the luminance and, if the calculated difference is out of a predetermined range, generating the light source control signal by using the generated detection signal.

15. The light source control method of claim 9, further comprising:
capturing an image;
detecting at least one of a color temperature distribution, a color distribution, and a luminance distribution of the captured image, and generating a detection signal; and
calculating a difference between the detection signal and a reference distribution value regarding at least one of the color temperature, the color, and the luminance and, if the calculated difference is out of a predetermined range, generating the light source control signal by using the generated detection signal.
